## Europäisches Patentamt
## European Patent Office
## Office européen des brevets

(19)

(11) Veröffentlichungsnummer: **0 012 169**
**B1**

(12) **EUROPÄISCHE PATENTSCHRIFT**

(45) Veröffentlichungstag der Patentschrift:
14.03.84

(51) Int. Cl.³: **B 29 J 5/00,** C 08 L 97/02,
B 32 B 21/00

(21) Anmeldenummer: 79103902.7

(22) Anmeldetag: 11.10.79

(54) Mehrschichtige, vorwiegend aminoplastgebundene Span- oder Faserplatte.

(30) Priorität: 29.11.78 DE 2851589

(43) Veröffentlichungstag der Anmeldung:
25.06.80 Patentblatt 80/13

(45) Bekanntmachung des Hinweises auf die Patenterteilung:
14.03.84 Patentblatt 84/11

(84) Benannte Vertragsstaaten:
AT BE CH DE FR GB IT NL SE

(56) Entgegenhaltungen:
DE - A - 1 653 167
DE - A - 2 317 884
DE - A - 2 553 459
DE - B - 2 306 771
DE - B - 2 335 015
DE - B - 2 444 002
DE - B - 2 615 288
DE - C - 1 188 750
DE - U - 7 440 894

(73) Patentinhaber: Fraunhofer-Gesellschaft zur Förderung der angewandten Forschung e.V., Leonrodstrasse 54, D-8000 München 19 (DE)

(72) Erfinder: Roffael, Edmone, Dr.-Ing., Joseph-Fraunhofer-Strasse 25, D-3300 Braunschweig (DE)
Erfinder: Mehlhorn, Lutz, Bienroderweg 54 E, D-3300 Braunschweig (DE)

(74) Vertreter: Weisert, Annekäte, Dipl.-Ing. Dr.-Ing. et al, Patentanwälte Dipl.-Chem. Dr. Walter Kraus Dipl.-Ing. Dr.-Ing. Annekäte Weisert Irmgardstrasse 15, D-8000 München 71 (DE)

## Mehrschichtige, vorwiegend aminoplastgebundene Span- oder Faserplatte

Die Erfindung betrifft eine mehrschichtige, vorwiegend aminoplastgebundene Span- oder Faserplatte, die in einem Innenbereich, vorzugsweise in der Mittelschicht, ein nicht zur Gruppe der Aminoplaste gehörendes Bindemittel, z. B. Diisocyanat, enthält.

Es ist aus der Lehre der DE-U-7 440 894 bekannt, dreischichtige Spanplatten herzustellen, wobei als Bindemittel für die Mittelschicht Diisocyanate und für die Deckschicht Harnstofformaldehydharze eingesetzt werden. Die Formaldehydabgabe derartiger Platten ist in dem Maße eingeschränkt, in dem Diisocyanate als Klebstoff eingesetzt sind.

Durch die DE-A-1 653 167 ist es ferner bekannt geworden, die gesamten Schichten von Spanplatten mit einem Aminoplastkleber abzubinden, wobei die Mittelschicht zusätzlich einen formaldehydreaktiven Stoff, z. B. Melamin enthalten kann. Diesem Dokument ist also die Lehre zu entnehmen, zur Reduzierung der Formaldehydabgabe in die aminoplastgebundenen Schichten einen Formaldehydfänger einzubringen.

Der überwiegende Teil der bisher gefertigten Spanplatten wurde mit Aminoplasten als Bindemittel in der Weise hergestellt, daß man das Leimharz auf die Holzspäne in Gewichtsanteilen von 5 bis 12% (Festharz, bezogen auf trockenes Spanmaterial) aufdüste, die so beleimten Späne mittels bekannter Streumaschinen zu Spanmatten formte und schließlich diese Matten in beheizten hydraulischen Pressen fertigpreßte.

Aminoplaste haben neben ihrer Preisgünstigkeit den Vorteil, daß sie unter Wärmeeinwirkung schnell poly-kondensieren (härten) und zu verhältnismäßig hohen Verleimfestigkeiten führen.

Diesen Vorteilen steht der Nachteil gegenüber, daß Spanplatten, die Aminoplaste als Bindemittel enthalten, nach der Herstellung Formaldehyd über relativ lange Zeiträume hinweg abgeben. Die Ursache der nachträglichen Formaldehydabgabe von aminoplastgebundenen Spanplatten liegt einerseits darin, daß nach dem Polykondensieren von Aminoplasten ein Teil des freien Formaldehyds zurückbleibt, der nachträglich aus den Platten entweicht; andererseits liegt die Ursache darin, daß poly-kondensierte Aminoplaste in der Spanplatte unter der Einwirkung von Feuchte und Temperatur hydrolysiert werden und Formaldehyd abgeben.

Die Formaldehydabgabe hängt von verschiedenen Faktoren ab, wie Molverhältnis von Harnstoff zu Formaldehyd, Preßzeit, Bindemittelaufwand, Alter der Platten usw. Die abgegebene Formaldehyd kann Werte erreichen, die das Wohlbefinden von Menge Menschen in Räumen, in denen harnstofformaldehydharzgebundene Spanplatten vorhanden sind, stark beeinträchtigen. Ferner gibt es bislang keine einheitliche Meinung über die gesundheitliche Bedenklichkeit bzw. Unbedenklichkeit des abgegebenen Formaldehyds.

Andere Bindemittel, die kein oder nur ein geringes Formaldehydabgabepotential haben, wie z. B. Diisocyanate, Phenolformaldehydharze, können im Prinzip für die Herstellung von Spanplatten verwendet werden. Diese Bindemittel haben jedoch bislang nur eine geringere technische Bedeutung, da sie entweder sehr teuer sind oder andere Nachteile besitzen. Um bei der Herstellung von Spanplatten nicht auf andere Bindemittel umstellen zu müssen, ist man seit langem bemüht, die nachträgliche Formaldehydabgabe von aminoplastgebundenen Spanplatten zu vermindern.

Es ist bereits vorgeschlagen worden, Harnstofformaldehydharze, die zu den Aminoplasten zählen, mit niedrigem Gehalt an einkondensiertem Formaldehyd einzusetzen. Die Verwendung dieser Harze verringert die nachträgliche Formaldehydabgabe erheblich, kann sich aber auf die physikalisch-technologischen Eigenschaften negativ auswirken (Wittmann, O.: »Formaldehyd in Harnstoff-Leimharzen für die Spanplattenherstellung«, Vortrag 3. Schenck-Spanplattentagung Braunschweig am 8. 11. 1974 und Roffael, E.: »Einfluß des Formaldehydgehaltes in Harnstoffharzen auf ihre Reaktivität und die Formaldehydabgabe damit gebundener Spanplatten«, Holz als Roh- und Werkstoff 34 [1976] S. 385—390).

Weiterhin ist bekannt, daß durch Beimengung von Harnstoff und/oder Ammoniak zum Harnstofformaldehydharz die Formaldehydabgabe in gewissem Umfang verringert werden kann, da diese Stoffe den Formaldehyd chemisch abzubinden vermögen. Die Zugabe von derartigen Stoffen zum Harz selbst ist jedoch nur begrenzt möglich, da mit zunehmendem Gehalt an derartigen Stoffen die Abbindegeschwindigkeit des Harzes verlangsamt wird und die physikalisch-technologischen Eigenschaften der Platten bei konstanter Preßzeit verschlechtert werden können (Plath, L.: »Einfluß der Härter-Zusammensetzung auf die Formaldehydabspaltung«, Holz als Roh- und Werkstoff 25 [1967], S. 169—173).

Auch ist bereits vorgeschlagen worden, den Holzspänen nach dem Beleimen feinteilige Stoffe beizumengen, die mit dem Formaldehyd chemisch reagieren (DE-A-1 653 167). Darüber hinaus ist vorgeschlagen worden, Harnstofformaldehydharze mit Gerbstoffen bzw. Gerbstoffderivaten und -abbauprodukten zu vermengen, die den Formaldehyd chemisch abfangen (DE-A-2 317 884). Auch hier werden die physikalisch-technologischen Eigenschaften der Platten bei vergleichbaren Preßbedingungen verschlechtert.

Weiterhin ist vorgeschlagen worden, dem Harnstofformaldehydharz Molekülverbindungen verschiedener Art beizumengen, die die Formaldehydabgabe verringern sollen (Kubitzky, C.: »Vermeiden von Geruchsbelästigung bei Spanplatten«, Industrie-Anzeiger 53 [1972], Ausgabe: Kunststoffe — Verarbeitung und Anwendung, Verlag W. Giradet, Essen).

Der Grund für die Festigkeitsverminderung liegt in all diesen Fällen darin, daß die formaldehydreaktiven Stoffe (Formaldehydfänger) wie Harnstoff, Melamin, Dicyandiamid bereits vor dem Aushärten des Harzes mit dem Formaldehyd reagieren und mithin die Aushärtungsgeschwindigkeit verlangsamen, womit sich die physikalisch-technologischen Eigenschaften der hergestellten Platten bei einer bestimmten Preßzeit verschlechtern.

Ferner ist bekannt, daß die nachträgliche Formaldehydabgabe dadurch verringert werden kann, daß man die Holzspanplatten mit einem Anstrichsystem auf Basis wäßriger Kunststoffdispersionsfarbe bestimmter Zusammensetzung allseitig streicht. Dieses formaldehydbindende Anstrichmittel für Holzspanplatten enthält Ammoniak, Milchsäurekasein und Hydrazinhydrat in bestimmter Zusammensetzung (DE-C-1 188 750). Derartig behandelte Platten sind teurer als unbehandelte und können vor allem nicht mehr z. B. mit Furnieren oder Kunststofflaminaten beschichtet werden.

Auch ist vorgeschlagen worden (P 2 829 021.3 & EP-A-6 486), Spanplatten, die Harnstofformaldehydharz als Bindemittel enthalten, im heißen Zustand, z. B. in kurzem Zeitabstand nach dem Pressen, mit einer 5—20%igen wäßrigen Harnstofflösung zu besprühen, um die Formaldehydabgabe der Platten zu verringern. An Stelle von Harnstoff können gemäß oben erwähnter Patentanmeldung andere unter Feuchte und Wärme Ammoniak bildende Verbindungen, wie z. B. Ammoniumkarbonat, verwendet werden. Dies kann zu Belästigungen bei der Herstellung derartiger Platten führen.

Es ist ebenfalls bekannt, daß man Diisocyanaten Stoffe wie Harnstoff beigeben kann, um die Härtungsgeschwindigkeit zu erhöhen, jedoch nicht in Zusammenhang mit mehrschichtigen Platten, bei denen auch zugleich Aminoplaste verwendet werden, in Verbindung mit der Formaldehydabgabeverminderung (DE-B-2 444 002).

Die Aufgabe dieser Erfindung ist es, bei mehrschichtigen, vorzugsweise aminoplastgebundenen Span- oder Faserplatten, die in einem Innenbereich, vorzugsweise in der Mittelschicht, ein nicht zur Gruppe der Aminoplaste gehörendes Bindemittel, z. B. Diisocyanat, enthalten, einen Weg zu finden, bei dem sowohl der nach dem Pressen noch frei vorliegende Formaldehyd als auch der durch Hydrolyse freiwerdende Formaldehyd abgefangen wird. Dabei sollen die physikalisch-technologischen Eigenschaften der Platten soweit wie möglich erhalten bleiben.

Diese Aufgabe wird nach den kennzeichnenden Merkmalen des Anspruchs 1 dadurch gelöst, daß für diesen Innenbereich nur solche Bindemittel verwendet werden, deren Aushärtung durch die Anwesenheit von formaldehydreaktiven Stoffen nicht beeinträchtigt wird, wobei dem Bindemittel diese zusätzlichen Stoffe in Form von Ammoniak, Ammoniumkarbonat, Harnstoffen, Thioharnstoffen, Melamin oder Dicyandiamid beigemischt sind, die mit dem nach dem Pressen der Platte noch vorhandenen oder freiwerdenden Formaldehyd unter Feuchte- und/oder Wärmeeinwirkung direkt, ggfs. auch indirekt über Spaltprodukte, ihn abbindend, reagieren.

Die Einbringung dieser Stoffe wird ermöglicht, ohne eine Verschlechterung der Festigkeitseigenschaften der hergestellten Spanplatten zu bewirken. Dieses Verfahren macht von der Tatsache Gebrauch, daß die verschiedenen Schichten getrennt beleimt und gestreut werden können. In den einzelnen Schichten können unterschiedliche Bindemittel verwendet werden. Das Verfahren sieht vor, z. B. dreischichtige Spanplatten herzustellen, bei denen in der Mittelschicht ein Bindemittel verwendet wird, das bei seiner Aushärtung bei der Herstellung von Platten durch die Anwesenheit von formaldehydreaktivenStoffen nicht nachteilig beeinflußt wird, wie z. B. Diisocyanate oder Phenolformaldehydharze, während für die Verleimung der Decklagen konventionelle Aminoplaste eingesetzt werden. Die Verminderung der Formaldehydabgabe wird dadurch erzielt, daß man dem für die Verleimung der Mittellagenspäne verwendeten Harz entweder Ammoniak bildende Verbindungen, wie z. B. Harnstoff, Thioharnstoff und Ammoniumkarbonat und/oder Stoffe, die in der Lage sind, mit dem Formaldehyd chemisch zu reagieren, wie Harnstoff, Melamin und Dicyandiamid, beigibt. Stoffe wie Harnstoff und Thioharnstoff können sowohl unter Wärme Ammoniak abgeben als auch mit dem Formaldehyd reagieren. Erst durch den Zusatz von solchen Stoffen lassen sich Spanplatten herstellen, die ein sehr niedriges Formaldehydabgabevermögen aufweisen, ohne daß dabei die physikalisch-technologischen Eigenschaften der hergestellten Platten qualitativ vermindert sind.

Günstigerweise wird man die Schicht(en) der Platte, die mit einem Harz gebunden ist (sind), dem formaldehydreaktive Stoffe beigemischt sind, im Innern der Platte anordnen, vorzugsweise als Mittelschicht. Während der Herstellung der Platte entsteht nämlich ein großer Anteil des Formaldehyds, der bekanntlich leicht flüchtig ist. Dieser wandert nun zusammen mit dem während des Herstellvorganges ebenfalls von den Außenschichten in die Mitte wandernden Dampf in Richtung Plattenmitte, wo der Dampf zunächst kondensiert und dem Formaldehyd auch die Möglichkeit bietet, sich in dem Kondensat zu lösen. Der kondensierende Dampf aktiviert die meisten der als Beispiel aufgeführten ammoniakabspaltenden Stoffe (durch Erwärmung) und bewirkt, daß der Formaldehyd gebunden wird, bevor er bei Abkühlung der Platte nach der Herstellung wieder (zusammen mit der hohen Feuchtigkeit in Plattenmitte) in die Außenschichten und anschließend ins Freie entweicht.

Selbstverständlich können, sollte dies aus anderen Gründen vorteilhaft erscheinen, auch mehrere Schichten, z. B. die der Mittelschicht benachbarten Schichten einer 5schichtigen Platte, mit Harzen gebunden sein, denen die formaldehydreaktiven Stoffe beigemengt sind.

3

Es ist im allgemeinen ausreichend, daß die Schichten, in denen sich die formaldehydreaktiven Stoffe befinden, zwischen 15 und 35 Gew.-% der Platte ausmachen. Maßgeblich hierfür ist die Menge des voraussichtlich entstehenden Formaldehyds und die Mischbarkeit des formaldehydreaktiven Stoffes mit dem Harz dieser Schicht. Für die Mindestdicke dieser Schichten ist auch z. B. die Streupräzision der Streumaschine maßgeblich. Es muß gewährleistet sein, daß die Dicken dieser Schichten einigermaßen gleichmäßig sind. Exakte Werte lassen sich generell nicht angeben. Es ist jedoch dem Fachmann möglich, einige Versuche durchzuführen, um die Optimierung der Wirtschaftlichkeit für die ihm vorliegenden Maschinen und Rohstoffe zu finden.

Für die Bindung der Schicht, in der das in den aminoplastgebundenen Schichten entstehende Formaldehyd aufgefangen werden soll, haben sich folgende Harzmischungen als günstig erwiesen: Diisocyanat oder Phenolformaldehydharze oder Melaminharze, denen entweder Ammoniak in Mengen bis zu 2 Gew.-% oder ammoniakabspaltende Stoffe (wie z. B. Harnstoffe, Thioharnstoffe oder Ammoniumcarbonat) in Mengen bis zu 4 Gew.-% zugemischt werden. An Stelle dieser Stoffe kann man auch Stoffe zumischen, die in der Lage sind, Formaldehyd zu binden, wie z. B. Melamin oder Dicyandiamid. Die Mengenangaben geben an, in welchem Bereich es bei Abbindevermögen und -geschwindigkeit der Harze nicht zu wesentlichen Abweichungen von den üblichen Werten kommt. Die Menge der zugemischten Stoffe richtet sich im Einzelfall nach der Menge des erfahrungsgemäß enstehenden Formaldehyds.

Selbstverständlich können die aminoplastgebundenen Schichten der Platte nach wie vor einen Härtungsbeschleuniger, wie z. B. Ammoniumchlorid enthalten. Die Reaktion mit dem Formaldehyd wird dadurch nicht gestört.

Es zeigte sich, daß sich die Formaldehydabgabe der fertigen erfindungsgemäßen Platten auf etwa die Hälfte des in der Tabelle angegebenen Wertes senken läßt, wenn diese sogleich nach der Herstellung möglichst langsam abgekühlt werden, was zweckmäßigerweise dadurch geschieht, daß man die Platten, wie grundsätzlich bereits bekannt, im heißen Zustand stapelt.

Anhand des folgenden Ausführungsbeispiels wird die Wirksamkeit der Erfindung nachgewiesen:

Drei verschiedene dreischichtige Plattentypen wurden hergestellt. Bei dem ersten Plattentyp wurde Harnstofformaldehydharz als Bindemittel (Kaurit 375 der Fa. BASF) sowohl für die Späne der Mittelschicht (40% des gesamten Plattengewichts) als auch für die Späne der Deckschichten (60% des gesamten Plattengewichts) verwendet. Bei dem zweiten Typ wurden die Späne der Deckschichten mit dem oben erwähnten Harnstofformaldehydharz verleimt, während die Späne der Mittelschicht mit Diisocyanaten (Kauranat 5043 der Firma BASF) verleimt wurden. Bei dem dritten Typ wurden neben den Diisocyanaten 2% Harnstoff (Feststoff/atro Späne) eingesetzt. Die Feuchte vor dem Pressen betrug für die Mittelschicht 9%, für die Deckschichten 13% und wurde bei den drei Plattentypen konstant gehalten. Angaben über die Bindemittelmengen und die Preßbedingungen bei den drei Plattentypen sind in Tabelle 1 aufgeführt.

An den hergestellten Spanplatten wurde nach Lagerung von einer Woche im Klimaraum bei 20°C und 65% rel. Feuchte die Formaldehydabgabe sowohl nach dem Perforatorverfahren (Verbestel, I.: Proceedings of the Formalin Committee, 18th meeting of engeneering committee FESYP, 1967) als auch nach der WKI-Methode (Roffael, E.: »Messung der Formaldehydabgabe — praxisnahe Methode zur Ermittlung der Formaldehydabgabe harnstoffharzgebundener Spanplatten für das Bauwesen«, Holz-Zentralblatt 101 [1975] 111, 1403 und 1404) nach 24stündiger Lagerung (Reaktionszeit) ermittelt. Aus den Daten in der Tabelle wird deutlich, daß die Verminderung der Formaldehydabgabe durch Diisocyanate in der Mittelschicht relativ gering ist. Erst nach der Zugabe von Harnstoff tritt eine erhebliche Verminderung der Formaldehydabgabe ein.

Tabelle

Einfluß der Zugabe von Harnstoff (Formaldehydfänger) zu den Spänen der Mittelschicht auf die Formaldehydabgabe von dreischichtigen, 20 mm dicken Spanplatten

| Plattentyp | Bindemittel Feststoff/atro Späne*) Mittelschicht, Gew.-% | Deckschicht, Gew.-% | Preßbedingungen | | Formaldehydabgabe | |
|---|---|---|---|---|---|---|
| | | | Preßzeit, min | Preßtemper., °C | Perforator-Wert, mg/100 g Platte | WKI-Wert (24 h), mg/100 g Platte |
| 1 | 8% HF* | 10% HF | 5 | 190 | 55,0 | 56,8 |
| 2 | 2% DI** | 10% HF | 5 | 190 | 47,6 | 49,2 |
| 3 | 2% DI +2% Harnstoff | 10% HF | 5 | 190 | 13,5 | 18,1 |

HF*) Harnstoffformaldehydharz (Kaurit der BASF) Molverhältnis von Harnstoff zu Formaldehyd 1 : 1,4.
DI**) Diisocyanate (Kauranat 5043 der BASF).
*) (atro = absolut trocken).

## Patentansprüche

1. Mehrschichtige, vorwiegend aminoplastgebundene Span- oder Faserplatte, die jedoch in einem Innenbereich, vorzugsweise in der Mittelschicht, als Bindemittel einen nicht zur Gruppe der Aminoplaste gehörenden Kleber, z. B. Diisocyanat, aufweist, dadurch gekennzeichnet, daß für diesen Innenbereich nur solche Bindemittel verwendet werden, deren Aushärtung durch die Anwesenheit von zusätzlichen formaldehydreaktiven Stoffen nicht beeinträchtigt wird, wobei dem Bindemittel diese zusätzlichen Stoffe in Form von Ammoniak, Ammoniumkarbonat, Harnstoffen, Thioharnstoffen, Melamin oder Dicyandiamid beigemischt sind, die mit dem nach dem Pressen der Platte noch vorhandenen oder freiwerdenden Formaldehyd unter Feuchte- und/oder Wärmeeinwirkung direkt, ggfs. auch indirekt über Spaltprodukte, ihn abbindend, reagieren.

2. Platte nach Patentanspruch 1, dadurch gekennzeichnet, daß der mit den formaldehydreaktiven Stoffen versehene Bereich zwischen 15 und 35% des Gesamtgewichts der Platte ausmacht.

3. Platte nach Patentanspruch 1 oder 2, dadurch gekennzeichnet, daß die mit dem Aminoplast als Bindemittel versehenen Schichten wie üblich einen Härtungsbeschleuniger enthalten, wie z. B. Ammoniumchlorid.

## Claims

1. A multilayer, predominantly aminoplast-bonded chip-or fiberboard, which however contains an adhesive that does not belong to the group of aminoplasts, for example a diisocyanate, as binder in its interior, preferably in the middle layer, characterized in that only binders of the type whose hardening is not adversely affected by the presence of additional formaldehyde-reactive sustances are used for this internal region, these additional substances being added to and mixed with the binder in the form of ammonia, ammonium carbonate, ureas, thioureas, melamine or dicyanodiamide which react with the formaldehye still present or being given off after pressing of the board either directly or even indirectly through cleavage products under the effect of moisture and/or heat, thereby setting the binder.

2. A board as claimed in Claim 1, characterized in that the region provided with the formaldehyde-reactive substances makes up from 15 to 35% of the total weight of the board.

3. A board as claimed in Claim 1 or 2, characterized in that the layers provided with the aminoplast as binder as usual contain a hardening accelerator, such as ammonium chloride for example.

## Revendications

1. Panneau de fibres ou de particules, lié de préférence avec une résine aminoplaste, qui contient cependant dans une zone interne, de préférence dans la couche centrale, en tant que liant, une colle n'appartenant pas au groupe des aminoplastes, par exemple du diisocyanate, caractérisé en ce qu'on n'utilise pour cette zone interne que des liants dont le durcissement ne soit pas influencé par la présence de produits réagissant au formaldéhyde, ces produits supplémentaires étant mélangés au liant sous forme d'ammmoniaque, de carbonate d'ammoniaque, d'urées, de thio-urées, de mélamine ou de dicyandiamide, qui réagissent en le liant avec le formaldéhyde encore présent après le pressage du plateau ou se libérant sous l'effet de l'humidité et/ou de la chaleur, directement ou éventuellement indirectement par l'intermédiaire de produits de décomposition.

2. Panneau selon la revendication 1, caractérisé en ce que la zone munie des produits réactifs au formaldéhyde représente entre 15 et 35% du poids total du panneau.

3. Panneau selon la revendication 1 ou 2, caractérisé en ce que les couches munies de l'aminoplaste comme liant, contiennent comme usuellement un accélérateur de durcissement, comme par exemple du chlorure d'ammoniaque.